(19) Europäisches Patentamt
European Patent Office
Office européen des brevets

(11) Veröffentlichungsnummer: **0 016 363**
**A1**

(12) # EUROPÄISCHE PATENTANMELDUNG

(21) Anmeldenummer: **80101035.6**

(22) Anmeldetag: **03.03.80**

(51) Int. Cl.[3]: **C 07 F 9/165**
C 07 F 9/24, C 07 F 9/40
A 01 N 57/10, A 01 N 57/18
A 01 N 57/26

(30) Priorität: **06.03.79 DE 2908739**

(43) Veröffentlichungstag der Anmeldung:
**01.10.80 Patentblatt 80/20**

(84) Benannte Vertragsstaaten:
**AT BE CH DE FR GB IT NL**

(71) Anmelder: **HOECHST AKTIENGESELLSCHAFT**
**Zentrale Patentabteilung Postfach 80 03 20**
**D-6230 Frankfurt/Main 80(DE)**

(72) Erfinder: **Salbeck, Gerhard, Dr.**
**Frankfurter Strasse 34**
**D-6238 Hofheim am Taunus(DE)**

(72) Erfinder: **Koch, Manfred Dr.**
**Kreuzheck 2**
**D-6239 Eppstein/Taunus(DE)**

(72) Erfinder: **Mildenberger, Hilmar, Dr.**
**Fasanenstrasse 24**
**D-6233 Kelkheim (Taunus)(DE)**

(72) Erfinder: **Bieringer, Hermann, Dr.**
**Eichenweg 26**
**D-6239 Eppstein/Taunus(DE)**

(72) Erfinder: **Köcher, Helmut, Dr.**
**Kleiststrasse 9**
**D-6238 Hofheim am Taunus(DE)**

(54) **Neue N-Aryl-carbamoyl-methyl-(di)-thio-phosphor-(on)-säureester(amide), Verfahren zu ihrer Herstellung und ihre Verwendung als Herbizide.**

(57) Verbindungen der Formel

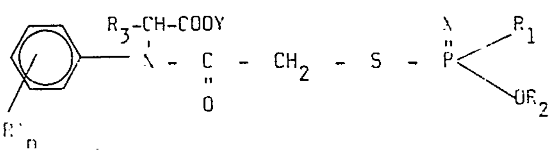

(I)

worin n 1 - 3 R Halogen, Alkyl, Alkoxy, Halogenalkyl, Alkylmercapto, $NO_2$, (subst.) Phenoxy oder (subst.) Naphthoxy; $R_1$ Alkyl, $CH_2Cl$, Alkoxy, Alkylmercapto oder subst. Amino; $R_2$ Alkyl; $R_3$ H oder Alkyl, Cycloalkyl, Alkenyl, Cycloalkenyl, (subst.) Alkinyl, (subst.) Phenyl, (Tetrahydro)furfuryl oder ein Kation bedeuten, sind wirksame Herbizide, insbesondere Selektivherbizide.

EP 0 016 363 A1

HOECHST AKTIENGESELLSCHAFT HOE 79/F 052 Dr.TG/ar

Neue N-Aryl-carbomoyl-methyl-(di)-thio-phosphor-(on)-säure-ester-(amide), Verfahren zu ihrer Herstellung und ihre Verwendung als Herbizide

Gegenstand der Erfindung sind neue N-Aryl-carbamoyl-methyl-(di)-thio-phosphor-(on)-säureester-(amide) der Formel I, Verfahren zu ihrer Herstellung und ihre Verwendung als Herbizide:

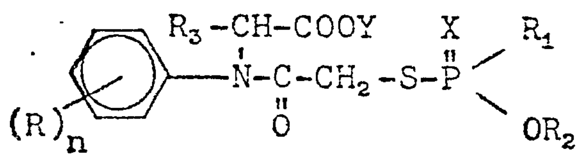 (I)

In der Formel I bedeuten

R gleiche oder verschiedene Reste aus der Gruppe Halogen, $(C_1-C_4)$-Alkyl, $(C_1-C_4)$-Alkoxi, $(C_1-C_2)$-Halogenalkyl, $(C_1-C_4)$-Alkylmercapto, Nitro, Phenoxi, ggf. substituiert durch 1 - 2 $CH_3$-, $C_2H_5$-, $CF_3$-Gruppen und/oder Halogenatome, oder Naphthoxy, ggf. substituiert durch 1 - 2 $CH_3$-Gruppen und/oder Halogenatome;

$R_1$ $(C_1-C_6)$-Alkyl, $CH_2$-Cl, $(C_1-C_6)$-Alkoxi, $(C_1-C_6)$-Alkylamino, $(C_3-C_5)$-Alkenylamino, N,N-$(C_1-C_6)$-Dialkylamino, $(C_5-C_8)$-Cycloalkylamino, ein 5 - 8 C-Atome enthaltender N-Heterocyclus, wobei eine $-CH_2$-Gruppe auch

durch Sauerstoff oder Schwefel ersetzt sein kann, oder $(C_1-C_3)$-Alkylmercapto;

$R_2$ $(C_1-C_6)$-Alkyl;

$R_3$ H, $(C_1-C_4)$-Alkyl;

Y H, $(C_1-C_{12})$-Alkyl, das gegebenenfalls durch 1 - 3 Halogen, vorzugsweise F, Cl, Br und/oder durch OH, $C_1-C_6$-Alkoxicarbonyl, $(C_1-C_6)$-Alkoxi, $(C_1-C_4)$-Alkylthio, $(C_1-C_6)$-Alkoxiethoxi, Halogen-$(C_1-C_2)$-alkoxi, Methoxi-ethoxi-ethoxi; $(C_1-C_4)$-Alkylamino, Di-$(C_1-C_4)$-alkylamino, Oxiranyl oder Phenoxi substituiert ist, wobei letzteres ebenfalls ein- bis zweifach durch Halogen oder $(C_1-C_4)$-Alkyl substituiert sein kann; $(C_5-C_6)$-Cycloalkyl, $(C_3-C_6)$-Alkenyl oder $(C_5-C_6)$-Cycloalkenyl;
$(C_3-C_4)$-Alkinyl, das gegebenenfalls ein- oder zweifach durch $(C_1-C_6)$-Alkyl, Phenyl oder Halogen substituiert ist;
Phenyl, das gegebenenfalls ein- bis dreifach durch $(C_1-C_4)$-Alkyl, $(C_1-C_4)$-Alkoxi, Halogen, $NO_2$ oder $CF_3$ substituiert ist;
Furfuryl, Tetrahydrofurfuryl oder ein Kation einer anorganischen oder organischen Base;

X Sauerstoff oder Schwefel und

n eine ganze Zahl von 1 - 3.

Dithiophosphorsäureester der allgemeinen Formel I, in denen $R_3$ = H, n = 0, $R_1$ = Alkoxi und $R_2$ = Alkyl sind in der US-PS 3 517 089 als Insektizide vorbeschrieben. Herbizide Eigenschaften dieser Verbindungen waren jedoch nicht bekannt.

Es war daher überraschend und nicht vorhersebar, daß die Einführung eines Substituenten R zu Verbindungen führt, die gute herbizide Eigenschaften besitzen.

Bevorzugte Reste in der Formel I sind für

$R_1$ $(C_1-C_6)$-Alkyl, $(C_1-C_3)$-Alkoxi;

$R_2$ $(C_1-C_4)$-Alkyl;

Der Rest Y kann beispielsweise sein:

Wasserstoff, Methyl, Ethyl, Propyl, Isopropyl, Isobutyl, sek.-Butyl, n-Butyl, Allyl, Propargyl, Benzyl, Cyclohexyl, Cyclopentyl, Cyclohexenyl, Methoxiethyl, Butoxiethyl, Methoxiethoxiethoxiethyl, 3-Methoxibutyl, Tetrahydrofurfuryl, 2,3-Epoxipropyl, Chlorethyl, Dichlorpropyl, Dimethylaminoethyl, Phenoxiethyl, 2,4-Dichlorphenoxiethyl, Phenyl, Tolyl, Xylyl, Chlorphenyl, Methylmercaptoethyl, Natrium, Kalium, Calcium, Ammonium, Diethylammonium, Triethylammonium, Ethanolammonium, Triethanolammonium.

Die Verbindungen der Formel (I) erhält man in an sich bekannter Weise, indem man

a) Verbindungen der Formel

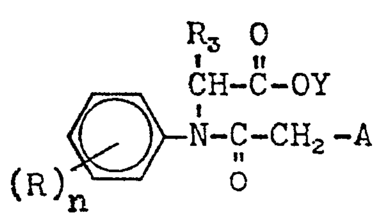

(II)

mit Phosphorverbindungen der Formel

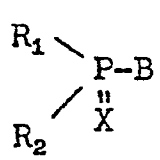

(III)

worin jeweils einer der Reste A und B Halogen, insbesondere Chlor oder Brom, und der andere die SY-Gruppe bedeutet, in welcher Y Wasserstoff oder ein Metallkation darstellt, gegebenenfalls in Gegenwart eines säurebindenden Mittels, oder.

b) zunächst Verbindungen der Formel IV

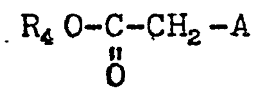 (IV)

mit Verbindungen der Formel III umsetzt und die erhaltenen Zwischenprodukte der Formel V

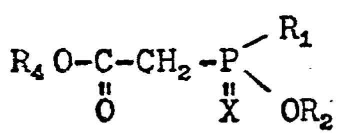 (V)

durch Umsetzung mit Anilinen der Formel VI

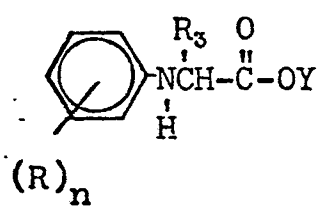 (VI)

in die Verbindungen der Formel I überführt

worin $R_4$ bevorzugt niederes Alkyl oder Phenyl bedeutet.

Für $R_3 \neq$ Wasserstoff weisen die Verbindungen der Formel I ein Asymmetriezentrum auf und liegen üblicherweise in racemischer Form vor. Die Racemate lassen sich nach üblichen Methoden in Diasteoreomere trennen. Ebenso ist es möglich, optisch aktive Ausgangsstoffe der Formel VI einzusetzen. Die Erfindung umfaßt daher auch optisch aktive Verbindungen der Formel (I)

Zu a) Die Phosphorverbindungen der Formel (III) (B=SY) reagieren mit den Chloracetaniliden der Formel (II) (A=Hal) ohne Schwierigkeiten, wobei vorteilhaft Temperaturen zwischen 0° und + 120 °C, vorzugsweise + 10 ° bis + 80 °C, angewendet werden.

Es ist ratsam, diese Umsetzung in Gegenwart eines gegenüber den Reaktionsteilnehmern inerten Lösungs- oder Verdünnungsmittels durchzuführen. In Betracht kommen in erster Linie niedere aliphatische Ketone wie Aceton oder Methylethylketon, Alkanole wie Methanol, Ethanol oder Isopropanol, Ester wie Essigsäureethylester, Nitrile, N-alkylierte Säureamide wie Dimethylformamid, Ether wie Dioxan, Glykoldimethether oder Tetrahydrofuran, chlorierte Kohlenwasserstoffe wie Chloroform oder Tetrachlorkohlenstoff aromatische Kohlenwasserstoffe wie z.B. Toluol, Xylol und Wasser sowie Gemische solcher Lösungsmittel.

Die Reaktion erfolgt unter Austausch des Halogenatoms der Chloracetanilide. Daher führt man die Umsetzung entweder unter Zusatz säurebindender Mittel oder mit den Salzen, insbesondere mit Alkalimetall- und Ammoniumsalzen der Phosphorverbindungen durch. Als säurebindende Mittel sind die Alkalimetallhydroxide und -carbonate bevorzugt; es können aber auch tertiäre Stickstoffbasen wie Pyridin oder Triethylamin verwendet werden.

Die Halogenessigsäureanilide der Formel (II) und ihre Herstellung sind in der Literatur beschrieben (z. B. DE-OS 25 45 946, BE-PS 796 263).

Die SY-Verbindungen gemäß der Formel (III) sind bekannt und nach üblichen Methoden leicht zugänglich.

Umgekehrt kann man auch Thioglykolsäureanilde der Formel (II) (A=SY) mit Halogen-phosphorverbindungen der Formel (III) (B=Hal) umsetzen, wobei im Falle A=SH ebenfalls in Gegenwart eines säurebindenden Mittels gearbeitet wird. Im allgemeinen werden etwa stöchiometrische Mengen der Reaktionspartner angewendet, jedoch kann ein Ueberschuß der Verbindung der Formel III von 5 - 10 % vorteilhaft sein.

Die Reaktion wird vorzugsweise in Gegenwart eines unter Reaktionsbedingungen inerten Lösungsmittels durchgeführt. Als solche sind z.B. die oben genannten verwendbar. Die Reaktionstemperaturen können innerhalb eines größeren Bereiches variiert werden, vorzugsweise arbeitet man zwischen ∓ 50 ° und + 120 °C. Als säurebindende Mittel sind ebenfalls die oben genannten verwendbar.

Die Thioglykolsäureanilide gemäß Formel (II), lassen sich nach literaturbekannten Methoden herstellen, z.B. J.Prakt. Chemie, 153, 65 (1939). Die Halogenphosphorverbindungen der Formel III sind bekannt und nach üblichen Methoden leicht zugänglich.

zu b) Das Verfahren b) verläuft in der ersten Stufe (Umsetzung von III mit IV) entsprechend dem Verfahren a). Das Zwischenprodukt der Formel V kann ohne Isolierung, d. h. in einem Eintopfverfahren, direkt der Aminolyse unterworfen werden, wobei man bei Temperaturen von 0 - 150°C arbeiten kann. Die Reaktionstemperatur richtet sich dabei nach der Reaktionsfähigkeit des Restes $OR_4$; aktivierte Ester wie z. B. Phenylester, reagieren bereits bei niederer Temperatur.

Die erfindungsgemäßen Mittel zeigen eine gute herbizide Wirksamkeit gegen ein breites Spektrum von wirtschaftlich wichtigen monokotylen Schadpflanzen, mit zusätzlicher Wirkung auf dikotyle Unkräuter. Dabei sind jedoch die Verbindungen gegen die Kulturpflanzen in der als herbizid wirksamen Dosierung gut verträglich, so daß sie zur Bekämpfung grasartiger und breitblättriger Unkräuter in vielen wichtigen Großkulturen eingesetzt werden können.

Man kann mit den erfindungsgemäßen Mitteln z. B. Ackerfuchsschwanz und Klettenlabkraut in Getreide, Hühnerhirse und Amaranthus in Mais und Borstenhirse und verschiedene dikotyle Unkräuter in Soja- oder Baumwollkulturen mit Erfolg bekämpfen, ohne daß die Kulturpflanze geschädigt wird. Ferner sind auch selektive Anwendungen in Reis-, Gemüse-, Luzerne- und Plantagenkulturen möglich. Die Anwendung kann in verschiedenen Applikationsverfahren erfolgen, wobei Vorauflauf-, Nachauflauf- oder Vorsaat-Verfahren mit Einarbeitung der Verbindungen in den Boden in Frage kommen. Je nach eingesetzter Dosierung wird dabei

eine vollkommene Abtötung der unerwünschten Pflanzen oder nur eine Wachstumshemmung erreicht. Die erfindungsgemäßen Mittel enthalten die Wirkstoffe der Formel I im allgemeinen zu 2 - 95 Gew.-%. Sie können als benetzbare Pulver, emulgierbare Konzentrate, versprühbare Lösungen, Stäubemittel oder Granulate in den üblichen Zubereitungen angewendet werden.

Benetzbare Pulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Oleyl- oder Stearylamine, Alkyl- oder Alkylphenyl-sulfonate und Dispergiermittel, z.B. ligninsulfonsaures Natrium, 2,2'-dinaphthylmethan,6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten erhalten.

Um in Wasser gute Suspensionen oder Emulsionen zu erreichen, werden weiterhin Netzmittel aus der oben genannten Reihe zugesetzt.

Stäubemittel erhält man durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittles Klebemitteln, z. B. Polyvinylakohol, polyacrylsaurem Natrium oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - hergestellt werden.

Bei herbiziden Mitteln können die Konzentrationen der Wirkstoffe in den handelsüblichen Formulierungen verschieden sein.

In benetzbaren Pulvern variiert die Wirkstoffkonzentration z.B. zwischen etwa 10 % und 95 %, der Rest besteht aus den oben angegebenen Formulierungszusätzen. Bei emulgierbaren Konzentraten ist die Wirkstoffkonzentration etwa 10 % bis 80 %. Staubförmige Formulierungen enthalten meistens 5 - 20 % an Wirkstoff, versprühbrar Lösungen etwa 2 - 20 %. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden.

Zur Anwendung werden die handelsüblichen Konzentrate gegebenenfalls in üblicher Weise verdünnt, z.B. bei benetzbaren Pulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt. Mit den äußeren Bedingungen wie Temperatur, Feuchtigkeit u.a. variiert die erforderliche Aufwendmenge. Sie beträgt im allgemeinen etwa 0,1 - 10 kg/ha, vorzugsweise etwa 0,15 bis 2,5 ka/ha Wirkstoff. Der erfindungsgemäße Wirkstoff kann mit anderen Herbiziden und Bodeninsektiziden kombiniert werden.

Eine andere Anwendungsform des vorliegenden Wirkstoffes besteht inseiner Mischung mit Düngemitteln, wodurch düngende und zugleich herbizide Mittel erhalten werden.

FORMULIERUNGSBEISPIELE

Beispiel A

Ein in Wasser leicht dispergierbares benetzbares Pulver wird erhalten, indem man

| | |
|---|---|
| 25 Gewichtsteile | S[N(4-Chlorphenyl)-N(1-carbomethoxiethyl)-carbamoylmethyl]-O,O-diethyl-dithiophosphat als Wirkstoff, |
| 64 Gewichtsteile | kaolinhaltigen Quarz als Inertstoff, |
| 10 Gewichtsteile | Ligninsulfonsaures Kalium und |
| 1 Gewichtsteil | oleylmethyltaurinsaures Natrium als Netz- und Dispergiermittel |

mischt und in einer Stiftmühle mahlt.

Beispiel B

Ein Stäubemittel, das sich zur Anwendung als Unkrautvertilgungsmittel gut eignet, wird erhalten, indem man

| | |
|---|---|
| 10 Gewichtsteile | S[N(4-Chlorphenyl)-N(1-carbomethoxiethyl-)-carbamoylmethyl]-O,O-diethyl-dithiophosphat als Wirkstoff und |
| 90 Gewichtsteile | Talkum als Inertstoff |

mischt und in einer Schlagmühle zerkleinert.

Beispiel C

Ein emulgierbares Konzentrat besteht aus

| | |
|---|---|
| 15 Gewichtsteilen | S/N(4-Chlorphenyl)-N(1-carbomethoxi-ethyl-)-carbamoylmethyl-7-O,O-diethyl-dithiophosphat |
| 75 Gewichtsteilen | Cyclohexanon als Lösungsmittel und |
| 10 Gewichtsteilen | oxethyliertes Nonylphenol (10 AeO) |

als Emulgator.

Beispiel D

Ein Granulat besteht z.B. aus etwa

| | |
|---|---|
| 2 - 15 Gewichtsteilen | S/N(4-Chlorphenyl)-N-(1-carbomethoxi-ethyl)-carbamoylmethyl7-O,O-diethyl-dithiophosphat |

und inerten Granulatträgermaterialien, wie z.B. Attapulgit, Bimsgranulat und Quarzsand.

## HERSTELLUNGSBEISPIELE

Allgemeine Vorschrift:

Zu einer Lösung oder Suspension von 0,10 - 0,11 Mol eines Ammoniumsalzes einer Phosphorverbindung der Formel III ($R_5$ = $SNH_4$ bzw. SNa) in 200 ml Glykoldimethylether gibt man bei Raumtemperatur unter Rühren 0,1 Mol eines Chloracetanilids der Formel II ($R_4$ = Cl). Man rührt ca. 3 - 5 Stunden bei 50 °C, saugt vom ausgefallenen Salz ab, verdünnt das Filtrat mit ca. 400 ml Toluol, wäscht die organische Phase gründlich mit Wasser und trocknet über Natriumsulfat. Nach dem Abdestillieren des Lösungsmittels hinterbleiben die Verfahrensprodukte als Oele, die zum Teil beim Anreiben kristallisieren.

Nach dem oben angebenen Verfahren wurden die in der folgenden Tabelle aufgeführten Verbindungen der Formel I gewonnen, deren Zusammensetzung durch Elementaranalyse bestätigt wurde und die durch Brechungsindex und/oder Schmelzpunkt charakterisiert sind:

Tabelle I

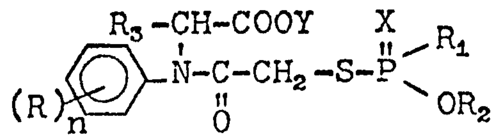

| Beispiel | $(R)_n$ | $R_1$ | $R_2$ | $R_3$ | X | Y | $n_D$ bzw. Fp. |
|---|---|---|---|---|---|---|---|
| 1 | 4-Cl | $OCH_3$ | $CH_3$ | H | S | $CH_3$ | $n_D^{24}$ 1.5645 |
| 2 | 4-Cl | $OC_2H_5$ | $C_2H_5$ | H | S | $CH_3$ | $n_D^{24}$ 1.5550 |
| 3 | 4-Cl | $NHCH(CH_3)_2$ | $C_2H_5$ | H | O | $CH_3$ | $n_D^{24}$ 1.5334 |
| 4 | 4-Cl | $OC_2H_5$ | $C_2H_5$ | H | O | $C_2H_5$ | $n_D^{24}$ 1.5243 |
| 5 | 4-Cl | $OC_3H_7$ (n) | $C_3H_7$ (n) | H | S | $C_2H_5$ | $n_D^{25}$ 1.5405 |
| 6 | 4-Cl | $NHCH_3$ | $C_2H_5$ | H | O | $C_2H_5$ | $n_D^{25}$ 1.5380 |
| 7 | 4-Cl | $N(CH_3)_2$ | $C_2H_5$ | H | O | $C_2H_5$ | $n_D^{25}$ 1.5320 |
| 8 | 2,6-$C_2H_5$ | $OC_2H_5$ | $C_2H_5$ | H | S | $C_2H_5$ | $n_D^{24}$ 1.5204 |
| 9 | 2,6-$C_2H_5$ | $CH_3$ | $C_2H_5$ | H | S | $C_2H_5$ | $n_D^{24}$ 1.5521 |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 10 | 2,6-$C_3H_7$(iso) | $OC_2H_5$ | $C_2H_5$ | H | S | $C_2H_5$ | 98 - 101 °C |
| 11 | 2,6-$C_3H_7$(iso) | $NHCH(CH_3)_2$ | $C_2H_5$ | H | O | $C_2H_5$ | $n_D^{25}$ 1.5150 |
| 12 | 4-Cl | $OCH_3$ | $CH_3$ | $CH_3$ | S | $CH_3$ | $n_D^{25}$ 1.5620 |
| 13 | 4-Cl | $OC_2H_5$ | $C_2H_5$ | $CH_3$ | S | $CH_3$ | $n_D^{25}$ 1.5520 |
| 14 | 4-Cl | $NHCH(CH_3)_2$ | $C_2H_5$ | $CH_3$ | O | $CH_3$ | $n_D^{25}$ 1.5310 |
| 15 | 2,6-$C_2H_7$(iso) | $NHCH(CH_3)_2$ | $C_2H_5$ | $CH_3$ | O | $CH_3$ | Oel |
| 16 | 2-$SCH_3$ | $OC_2H_5$ | $C_2H_5$ | $CH_3$ | S | $CH_3$ | Fp. 64-68°C |
| 17 | 2-$SCH_3$ | $OCH_3$ | $CH_3$ | $CH_3$ | S | $CH_3$ | Fp. 85-88°C |
| 18 | 2-$SCH_3$ | $NHCH(CH_3)_2$ | $C_2H_5$ | $CH_3$ | O | $CH_3$ | Oel |
| 19 | 3.4-Cl | $OC_2H_5$ | $C_2H_5$ | $CH_3$ | S | $C_2H_5$ | $n_D^{24}$ 1.5520 |
| 20 | 3.4-Cl | $OC_2H_5$ | $C_2H_5$ | $CH_3$ | O | $C_2H_5$ | $n_D^{23}$ 1.5290 |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 21 | 3,4-Cl | $N(CH_3)_2$ | $C_2H_5$ | $CH_3$ | O | $C_2H_5$ | $n_D^{23}$ 1.5360 |
| 22 | 3,4-Cl | $NHCH(CH_3)_2$ | $C_2H_5$ | $CH_3$ | O | $C_2H_5$ | $n_D^{23}$ 1.5350 |
| 23 | 2,6-$CH_3$ | $OCH_3$ | $CH_3$ | H | S | $CH_3$ | $n_D^{26}$ 1.5427 |
| 24 | 2,6-$CH_3$ | $OC_2H_5$ | $C_2H_5$ | H | S | $CH_3$ | Fp. 76-78°C |
| 25 | 2,6-$CH_3$ | $OC_3H_7$ n | $C_3H_7$(n) | H | S | $CH_3$ | $n_D^{26}$ 1.5324 |
| 26 | 2,6-$CH_3$ | $OC_2H_5$ | $C_2H_5$ | H | O | $CH_3$ | $n_D^{26}$ 1.5498 |
| 27 | 2-$CH(CH_3)_2$ | $OCH_3$ | $CH_3$ | H | S | $CH_3$ | Fp. 86 - 89°C |
| 28 | 2-$CH(CH_3)_2$ | $OC_2H_5$ | $C_2H_5$ | H | S | $CH_3$ | Fp. 45 - 47°C |
| 29 | 2-$CH(CH_3)_2$ | $OC_2H_5$ | $C_2H_5$ | H | O | $CH_3$ | |
| 30 | 2-$CH(CH_3)_2$ | $OC_3H_7$ n | $C_3H_7$(n) | H | S | $CH_3$ | $n_D^{23}$ 1.5310 |
| 31 | 2-$CH_3$; 6-$C_2H_5$ | $OCH_3$ | $CH_3$ | H | S | $CH_3$ | |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 32 | $2-CH_3$ ; $6-C_2H_5$ | $OC_2H_5$ | $C_2H_5$ | H | O | $CH_3$ | |
| 33 | $2-CH_3$ ; $6-C_2H_5$ | $CH_3$ | $C_2H_5$ | H | S | $CH_3$ | |
| 34 | $2-CH_3$ ; $6-C_2H_5$ | $NHCH_3$ | $CH_3$ | H | O | $CH_3$ | |
| 35 | 2,6-$CH_3$ | $OCH_3$ | $CH_3$ | H | S | $C_2H_5$ | $n_D^{26}$ 1.5324 |
| 36 | 2,6-$CH_3$ | $OC_2H_5$ | $C_2H_5$ | H | S | $C_2H_5$ | Fp. 53-55°C |
| 37 | 2,6-$CH_3$ | $OC_2H_5$ | $C_2H_5$ | H | O | $C_2H_5$ | $n_D^{26}$ 1.5585 |
| 38 | 2,6-$CH_3$ | $OC_3H_7$ (n) | $C_3H_7$ (n) | H | S | $C_2H_5$ | $n_D^{24}$ 1.5330 |
| 39 | 2,6-$CH_3$ | $OCH_3$ | $CH_3$ | $CH_3$ | S | $CH(CH_3)_2$ | $n_D^{23}$ 1.5428 |
| 40 | 2,6-$CH_3$ | $OC_2H_5$ | $C_2H_5$ | $CH_3$ | S | $CH(CH_3)_2$ | |
| 41 | 2,6-$CH_3$ | $OC_2H_5$ | $C_2H_5$ | $CH_3$ | O | $CH(CH_3)_2$ | |
| 42 | 2,6-$CH_3$ | $OC_3H_7$ (n) | $C_3H_7$ (n) | $CH_3$ | S | $CH(CH_3)_2$ | |
| 43 | 2,6-$CH_3$ | $OCH_3$ | $CH_3$ | $CH_3$ | S | $-CH_2-CH(CH_3)_2$ | |
| 44 | 2,6-$CH_3$ | $OC_2H_5$ | $C_2H_5$ | $CH_3$ | S | $-CH_2CH(CH_3)_2$ | |

Tabelle I (Fortsetzung)

| Bei-spiel | $(R)_n$ | $R_1$ | $R_2$ | $R_3$ | X | Y | $n_D$ bzw. Fp. |
|---|---|---|---|---|---|---|---|
| 45 | 2,6-$CH_3$ | $OC_2H_5$ | $C_2H_5$ | $CH_3$ | O | $CH_2-CH(CH_3)_2$ | |
| 46 | 2,6-$CH_3$ | $OC_3H_7$(n) | $C_3H_7$(n) | $CH_3$ | S | $CH_2-CH(CH_3)_2$ | |
| 47 | 2,6-$CH_3$ | $OCH_3$ | $CH_3$ | $CH_3$ | S | $-CH_2-CH_2-OCH_3$ | |
| 48 | 2,6-$CH_3$ | $OC_2H_5$ | $C_2H_5$ | $CH_3$ | S | $-CH_2-CH_2-OCH_3$ | |
| 49 | 2,6-$CH_3$ | $OC_2H_5$ | $C_2H_5$ | $CH_3$ | O | $-CH_2-CH_2-OCH_3$ | |
| 50 | 2,6-$CH_3$ | $CH_3$ | $C_2H_5$ | $CH_3$ | S | $-CH_2-CH_2-OCH_3$ | |
| 51 | 2,6-$CH_3$ | $OCH_3$ | $CH_3$ | $CH_3$ | S | $-CH_2(CH_2)_4CH_3$ | |
| 52 | 2,6-$CH_3$ | $OC_2H_5$ | $C_2H_5$ | $CH_3$ | S | $-CH_2(CH_2)_4CH_3$ | |
| 53 | 2,6-$CH_3$ | $OC_2H_5$ | $C_2H_5$ | $CH_3$ | O | $-CH_2(CH_2)_4CH_3$ | |
| 54 | 2,6-$CH_3$ | $CH_3$ | $CH_3$ | $CH_3$ | S | $-CH_2(CH_2)_4CH_3$ | |
| 55 | 2,6-$CH_3$ | $OCH_3$ | $CH_3$ | H | S | $CH(CH_3)_2$ | $n_D^{24}$ 1.5320 |
| 56 | 2,6-$CH_3$ | $OC_2H_5$ | $C_2H_5$ | H | S | $CH(CH_3)_2$ | $n_D^{24}$ 1.5330 |
| 57 | 2,6-$CH_3$ | $OC_2H_5$ | $C_2H_5$ | H | O | $CH(CH_3)_2$ | |
| 58 | 2,6-$CH_3$ | $OC_3H_7$(n) | $C_3H_7$(n) | H | S | $CH(CH_3)_2$ | $n_D^{23}$ 1.5281 |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 59 | 2,6-$CH_3$ | $OCH_3$ | $CH_3$ | H | S | $CH_2-CH(CH_3)_2$ | $n_D^{26}$ 1.5348 |
| 60 | 2,6-$CH_3$ | $OC_2H_5$ | $C_2H_5$ | H | S | $CH_2-CH(CH_3)_2$ | $n_D^{26}$ 1.5300 |
| 61 | 2,6-$CH_3$ | $OC_2H_5$ | $C_2H_5$ | H | O | $CH_2-CH(CH_3)_2$ | $n_D^{26}$ 1.5430 |
| 62 | 2,6-$CH_3$ | $OC_3H_7$(n) | $C_3H_7$(n) | H | S | $CH_2-CH(CH_3)_2$ | $n_D^{26}$ 1.5255 |
| 63 | 2,4-$CH_3$ | $OCH_3$ | $CH_3$ | H | S | $CH_3$ | |
| 64 | 2,4-$CH_3$ | $OC_2H_5$ | $C_2H_5$ | H | S | $CH_3$ | Fp. 78 - 81°C |
| 65 | 2,4-$CH_3$ | $C_2H_5$ | $C_2H_5$ | H | S | $CH_3$ | |
| 66 | 2,4-$CH_3$ | $NHCH(CH_3)_2$ | $C_2H_5$ | H | O | $CH_3$ | |
| 67 | 2-$CH_3$ | $OCH_3$ | $CH_3$ | H | S | $CH_3$ | $n_D^{23}$ 1.5493 |
| 68 | 2-$CH_3$ | $OC_2H_5$ | $C_2H_5$ | H | S | $CH_3$ | $n_D^{24}$ 1.5490 |
| 69 | 2-$CH_3$ | $OC_2H_5$ | $C_2H_5$ | H | O | $CH_3$ | |
| 70 | 2-$CH_3$ | $OC_3H_7$(n) | $C_3H_7$(n) | H | S | $CH_3$ | Fp. 53 - 55°C |
| 71 | 2,4,5-$OCH_3$ | $OCH_3$ | $CH_3$ | $CH_3$ | S | $CH_3$ | |
| 72 | 2,3,5-$OCH_3$ | $OC_2H_5$ | $C_2H_5$ | $CH_3$ | S | $CH_3$ | |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 73 | 2,4,5-$OCH_3$ | $OC_2H_5$ | $C_2H_5$ | $CH_3$ | O | $CH_3$ | |
| 74 | 3-$OCH_3$ | $OCH_3$ | $CH_3$ | H | S | $CH_3$ | |
| 75 | 3-$OCH_3$ | $OC_2H_5$ | $C_2H_5$ | H | S | $CH_3$ | |
| 76 | 3-$OCH_3$ | $OC_2H_5$ | $C_2H_5$ | H | O | $CH_3$ | |
| 77 | 3-$OCH_3$ | $OC_3H_7$ (n) | $C_3H_7$ n | H | S | $CH_3$ | |
| 78 | 2,3-$CH_3$ | $OCH_3$ | $CH_3$ | H | S | $CH_3$ | $n_D^{26}$ 1.5440 |
| 79 | 2,3-$CH_3$ | $OC_2H_5$ | $C_2H_5$ | H | S | $CH_3$ | $n_D^{26}$ 1.5488 |
| 80 | 2,3-$CH_3$ | $OC_2H_5$ | $C_2H_5$ | H | O | $CH_3$ | |
| 81 | 2,3-$CH_3$ | $OC_3H_7$ (n) | $C_3H_7$ n | H | S | $CH_3$ | $n_D^{26}$ 1.5378 |
| 82 | 2-$CH_3$-6-Cl | $OCH_3$ | $CH_3$ | H | S | $CH_3$ | |
| 83 | 2-Cl-6-$CH_3$ | $OC_2H_5$ | $C_2H_5$ | H | S | $CH_3$ | Fp. 48 - 52°C |
| 84 | 2-Cl-6-$CH_3$ | $C_4H_9$ n | $C_2H_5$ | H | S | $CH_3$ | |

Tabelle I (Fortsetzung)

| Beispiel | $(R)_n$ | $R_1$ | $R_2$ | $R_3$ | X | Y | $n_D$ bzw. Fp. |
|---|---|---|---|---|---|---|---|
| 85 | $2,6-C_2H_5$ | $NHCH(CH_3)_2$ | $C_2H_5$ | H | O | $C_2H_5$ | $n_D^{22}$ 1.5253 |
| 86 | $2-Cl,6-CH_3$ | $OC_3H_7$(n | $C_3H_7$(n) | H | S | $CH_3$ | $n_D^{25}$ 1.5400 |
| 87 | $3-CH_3$ | $OC_3H_7$(n) | $C_3H_7$(n) | H | S | $CH_3$ | $n_D^{23}$ 1.5400 |
| 88 | $3-CH_3$ | $OC_2H_5$ | $C_2H_5$ | H | S | $CH_3$ | $n_D^{23}$ 1.5472 |
| 89 | $3-CH_3$ | $OCH_3$ | $CH_3$ | H | S | $CH_3$ | $n_D^{26}$ 1.5536 |
| 90 | $3-CH_3$ | $OC_2H_5$ | $C_2H_5$ | H | O | $CH_3$ | $n_D^{24}$ 1.5255 |
| 91 | $2,4-CH_3$ | $OC_3H_7$(n) | $C_3H_7$(n) | H | S | $CH_3$ | Fp. 75 - 79°C |

## BIOLOGISCHE BEISPIELE

Die biologische Prüfung der erfindungsgemäßen Verbindungen zeigte deren gute herbizide Wirksamkeit gegen ein breites Spektrum von wirtschaftlich wichtigen Schadgräsern wie Lolium, Poa, Setaria, Echinochloa u.a. verbunden mit zusätzlicher Wirkung auf breitblättrige Unkräuter. Die erfindungsgemäßen Verbindungen waren gegen viele wichtige Kulturpflanzen in den herbizid wirksamen Dosierungen gut verträglich, so daß sie zur Bekämpfung grasartiger und breitblättriger Unkräuter in diesen Kulturen eingesetzt werden können.

### Beispiel: (Vorauflaufverfahren)

Verschiedene wichtige Unkräuter und Kulturpflanzen wurden in Töpfen ausgesät und vor dem Auflaufen mit den erfindungsgemäßen Verbindungen und Vergleichsmitteln behandelt. Die Töpfe wurden anschließend im Gewächshaus aufgestellt und unter guten Wachstumsbedingungen gehalten. 4 Wochen später wurden die Wirksamkeit gegen Unkräuter und das Selektivverhalten an den Kulturpflanzen visuell auf prozentuale Schädigung im Vergleich zu Unbehandelt bonitiert.

Hierbei ergaben sich die in der Tabelle dargestellten Werte, die belegen, daß erfindungsgemäße Verbindungen gegen viele wichtige Unkräuter und Ungräser hervorragend herbizid wirksam sind, aber gleichzeitig in hohen Dosierungen (z.B. 2,4 kg AS/ha) Kulturpflanzen wie Sojabohne und Baumwolle nicht schädigen. Sie eignen sich daher zur selektiven Unkrautbekämpfung in solchen Kulturen.

Tabelle: Wirkung und Selektivität verschiedener Verbindungen im Vorauflaufverfahren (Pflanzenschädigung in %)

| Beispiel | kg AS/ha | Wirkung gegen Unkräuter | | | | Verträglichkeit an Kulturpflanzen | |
|---|---|---|---|---|---|---|---|
| | | AL | ECG | SA | AMR | GS | GH |
| 8 | 2.4 | 100 | 100 | 100 | 100 | 0 | 0 |
| 20 | 2.4 | 90 | 90 | 100 | 100 | 0 | 0 |
| 13 | 2.4 | 80 | 100 | 100 | 100 | 0 | 0 |
| 9 | 2.4 | 95 | 100 | 100 | 100 | 0 | 0 |
| 15 | 2.4 | 98 | 100 | 100 | 85 | 0 | 0 |
| 23 | 2.4 | - | 100 | 60 | 50 | 0 | 0 |
| 39 | 2.4 | - | 80 | - | - | 0 | 0 |
| 55 | 2.4 | 90 | 100 | 100 | 100 | 0 | 0 |
| 56 | 2.4 | 50 | 100 | 98 | 60 | 0 | 0 |
| 59 | 2.4 | - | 98 | 100 | - | 0 | 0 |
| 60 | 2.4 | - | 90 | 80 | - | 0 | 0 |

AL = Alopecurus;
ECG = Echinochloa;
SA = Setaria;
AMR = Amaranthus;
GS = Sojabohne;
GH = Baumwolle;
AS = Aktivsubstanz

Patentansprüche:

1. N-Aryl-carbamoylmethyl-(di)-thiophosphor-(on)-säureester-(amide) der allgemeinen Formel I,

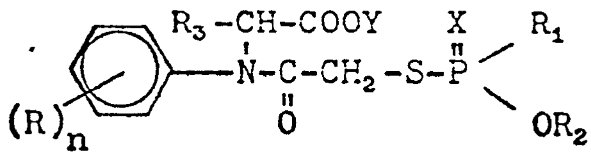

(I)

worin

R gleiche oder verschiedene Reste aus der Gruppe Halogen, $(C_1-C_4)$-Alkyl, $(C_1-C_4)$-Alkoxi, $(C_1-C_2)$-Halogenalkyl, $(C_1-C_4)$-Alkylmercapto, Nitro, Phenoxi, ggf. substituiert durch 1 - 2 $CH_3$-, $C_2H_5$-, $CF_3$-Gruppen und/oder Halogenatome, oder Naphthoxy, ggf. substituiert durch 1 - 2 $CH_3$-Gruppen und/oder Halogenatome;

$R_1$ $(C_1-C_6)$-Alkyl, $CH_2$-Cl, $(C_1-C_6)$-Alkoxi, $(C_1-C_6)$-Alkylamino, $(C_3-C_5)$-Alkylenamino, N,N-$(C_1-C_6)$-Di-alkylamino, $(C_5-C_8)$-Cycloalkylamino oder ein 5 - 8 C-Atome enthaltender N-Heterocyclus, wobei eine $-CH_2$-Gruppe auch durch Sauerstoff oder Schwefel ersetzt sein kann, $(C_1-C_3)$-Alkylmercapto;

$R_2$ $(C_1-C_6)$-Alkyl;

$R_3$ H, $(C_1-C_4)$-Alkyl;

Y H, $(C_1-C_{12})$-Alkyl, das gegebenenfalls durch 1 - 3 Halogen, vorzugsweise F, Cl, Br und/oder durch OH, $C_1-C_6$-Alkoxicarbonyl, $(C_1-C_6)$-Alkoxi, $(C_1-C_4)$-Alkylthio, $(C_1-C_6)$-Alkoxiethoxi, Halogen-$(C_1-C_2)$-alkoxi, Methoxi-ethoxi-ethoxi; $(C_1-C_4)$-Alkylamino, Di-$(C_1-C_4)$-alkylamino, Oxiranyl oder Phenoxi substituiert ist, wobei letzteres ebenfalls ein- bis zweifach durch Halogen oder $(C_1-C_4)$-Alkyl substituiert sein kann;
$(C_5-C_6)$-Cycloalkyl, $(C_3-C_6)$-Alkenyl oder $(C_5-C_6)$-Cycloalkenyl;
$(C_3-C_4)$-Alkinyl, das gegebenenfalls ein- oder zweifach durch $(C_1-C_6)$-Alkyl, Phenyl oder Halogen substituiert ist;
Phenyl, das gegebenenfalls ein- bis dreifach durch $(C_1-C_4)$-Alkyl, $(C_1-C_4)$-Alkoxi, Halogen, $NO_2$ oder $CF_3$ substituiert ist;
Furfuryl, Tetrahydrofurfuryl oder ein Kation einer anorganischen oder organischen Base;

X Sauerstoff oder Schwefel und

n eine ganze Zahl von 1 - 3 bedeuten.

2. Verfahren zur Herstellung von Verbindungen der Formel I, dadurch gekennzeichnet, daß man

a) Verbindungen der Formel

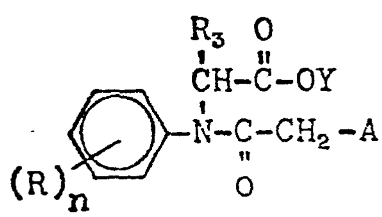

(II)

mit Phosphorverbindungen der Formel

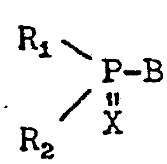

(III)

worin jeweils einer der Reste A und B Halogen, insbesondere Chlor und Brom, und der andere die SY-Gruppe bedeutet, in welcher Y Wasserstoff oder ein Metallkation darstellt, gegebenenfalls in Gegenwart eines säurebindenden Mittels, oder

b) zunächst Verbindungen der Formel IV

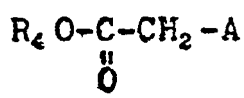 (IV)

mit Verbindungen der Formel III umsetzt und die erhaltenen Zwischenprodukte der Formel V

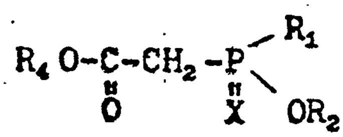 (V)

durch Umsetzung mit Anilinen der Formel VI

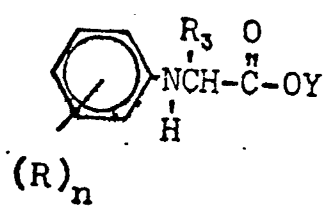 (VI)

in die Verbindungen der Formel I überführt,

worin $R_4$ bevorzugt niederes Alkyl oder Phenyl bedeutet.

3. Herbizide Mittel, gekennzeichnet durch einen Gehalt an einer Verbindung der Formel I als Wirkstoff.

4. Verwendung von Verbindungen der Formel I zur Bekämpfung unerwünschten Pflanzenwuchses.

5) Verbindung der Formel

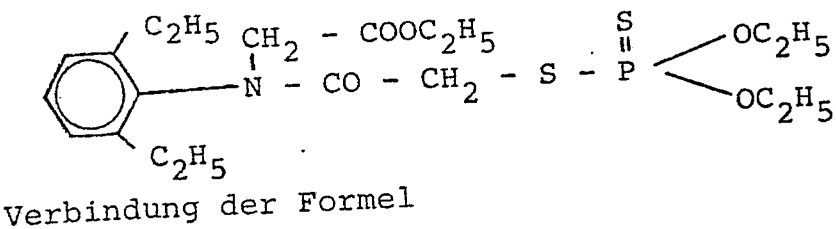

6) Verbindung der Formel

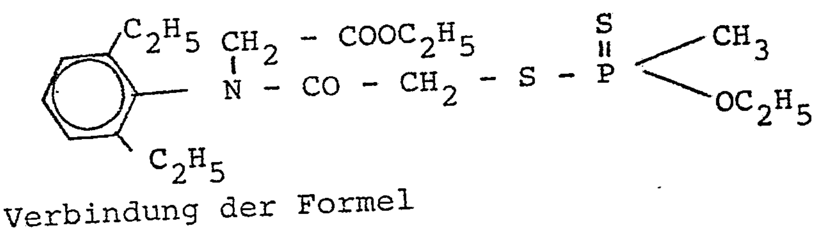

7) Verbindung der Formel

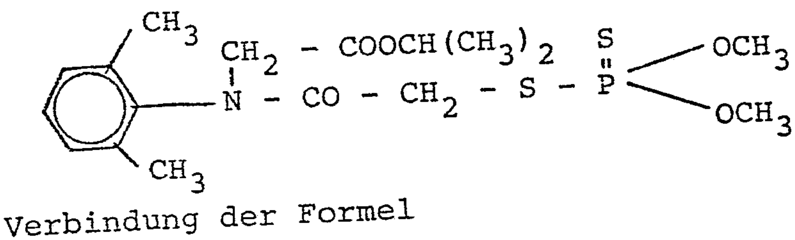

8) Verbindung der Formel

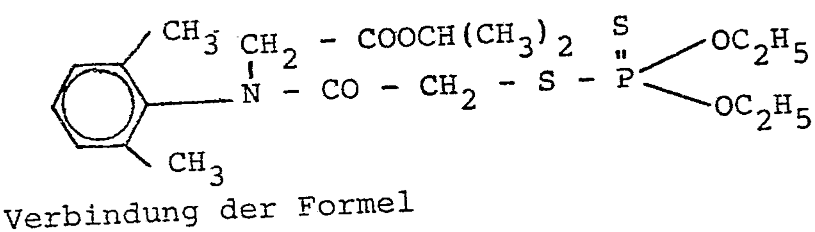

9) Verbindung der Formel

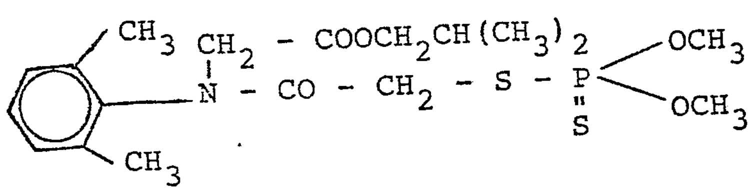

Patentansprüche für Österreich:

1. Herbizide Mittel, gekennzeichnet durch einen Gehalt an einer Verbindung der Formel (I)

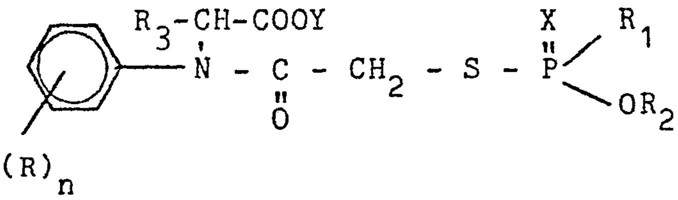

(I)

worin

R gleiche oder verschiedene Reste aus der Gruppe Halogen, $(C_1-C_4)$-Alkyl, $(C_1-C_4)$-Alkoxi, $(C_1-C_2)$-Halogenalkyl, $(C_1-C_4)$-Alkylmercapto, Nitro, Phenoxi, gegebenenfalls substituiert durch 1 - 2 $CH_3$-, $C_2H_5$-, $CF_3$-Gruppen und/oder Halogenatome, oder Naphthoxy, gegebenenfalls substituiert durch 1 - 2 $CH_3$-Gruppen und/oder Halogenatome;

$R_1$ $(C_1-C_6)$-Alkyl, $CH_2$-Cl, $(C_1-C_6)$-Alkoxi, $(C_1-C_6)$-Alkylamino, $(C_3-C_5)$-Alkenylamino, N,N-$(C_1-C_6)$-Dialkylamino, $(C_5-C_8)$-Cycloalkylamino, ein 5 - 8 C-Atome enthaltender N-Heterocyclus, wobei eine $-CH_2$-Gruppe auch durch Sauerstoff oder Schwefel ersetzt sein kann, $(C_1-C_3)$-Alkylmercapto;

$R_2$ $(C_1-C_6)$-Alkyl;

$R_3$ H, $C_1-C_4)$-Alkyl;

Y H, $(C_1-C_{12})$-Alkyl, das gegebenenfalls durch 1 - 3 Halogen, vorzugsweise F, Cl, Br und/oder durch OH, $C_1-C_6$-Alkoxicarbonyl, $(C_1-C_6)$-Alkoxi, $(C_1-C_4)$-Alkylthio, $(C_1-C_6)$-Alkoxiethoxi, Halogen-$(C_1-C_2)$-alkoxi, Methoxi-ethoxi-ethoxi; $(C_1-C_4)$-Alkylamino, Di-$(C_1-C_4)$-alkylamino, Oxiranyl oder Phenoxi substituiert ist, wobei letzteres ebenfalls ein- bis zweifach durch Halogen oder $(C_1-C_4)$-Alkyl substituiert sein kann;

($C_5$-$C_6$)-Cycloalkyl, ($C_3$-$C_6$)-Alkenyl oder ($C_5$-$C_6$)-Cycloalkenyl;
($C_3$-$C_4$)-Alkinyl, das gegebenenfalls ein- oder zweifach durch ($C_1$-$C_6$)-Alkyl, Phenyl oder Halogen substituiert ist;
Phenyl, das gegebenenfalls ein- bis dreifach durch ($C_1$-$C_4$)-Alkyl, ($C_1$-$C_4$)-Alkoxi, Halogen, $NO_2$ oder $CF_3$ substituiert ist;
Furfuryl, Tetrahydrofurfuryl oder ein Kation einer anorganischen oder organischen Base;

X Sauerstoff oder Schwefel und

n eine ganze Zahl von 1 - 3

bedeuten.

2. Verwendung von Verbindungen der Formel (I) bzw. diese enthaltenden Mitteln zur Bekämpfung von Schadpflanzen.

0016363

Europäisches Patentamt

# EUROPÄISCHER RECHERCHENBERICHT

Nummer der Anmeldung

EP 80 10 1035

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | US - A - 3 517 089 (P.E. NEWALLIS)<br>* Das ganze Dokument *<br>-- | 1,3 |
| | FR - A - 2 340 324 (HOECHST)<br>* Ansprüche *<br>-- | 1,3 |
| | FR - A - 2 340 047 (HOECHST)<br>* Ansprüche *<br>-- | 1,3 |
| | FR - A - 2 361 067 (HOECHST)<br>* Ansprüche *<br>-- | 1,3 |
| P | GB - A - 2 027 029 (SUMITOMO)<br>* Das ganze Dokument *<br>----- | 1-4 |

KLASSIFIKATION DER ANMELDUNG (Int.Cl. 3)

C 07 F 9/165
9/24
9/40
A 01 N 57/10
57/18
57/26

RECHERCHIERTE SACHGEBIETE (Int. Cl. 3)

C 07 F 9/165
9/24
9/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16-06-1980 | BESLIER |